# EUROPEAN PATENT APPLICATION

(11) **EP 4 492 641 A1**
(43) Date of publication of application: **15.01.2025**
(21) Application number: 23184793.0
(22) Date of filing: 11.07.2023
(51) Int. Cl.: H02K 1/28, H02K 1/32, H02K 3/52, H02K 1/24, H02K 9/04

(54) **ROTATING ELECTRICAL MACHINE COMPRISING COIL SUPPORTS**

(71) Applicant: ABB SCHWEIZ AG, 5400 Baden (CH)
(72) Inventor: LUNDIN, Magnus, Västerås (SE); PORSBY, Gunnar, Västerås (SE)
(74) Representative: Kransell & Wennborg KB

(57) **Abstract**

A rotating electrical machine comprising: a stator, and a salient pole rotor (7) rotatably arranged in the stator, the salient pole rotor (7) comprising: salient poles (9), each salient pole (9) comprising a protruding body (9a) and a rotor coil (11) wound around the protruding body (9a), and coil supports (15) arranged between adjacent salient poles (9), configured to hold the rotor coils (11) of the adjacent salient poles (9) in place, wherein each coil support (15) comprises a structure (15a) configured to enable air flow in a radial direction of the salient pole rotor (7), and in the longitudinal axial direction of the salient pole rotor (7).

## Description

### TECHNICAL FIELD

The present disclosure generally relates to rotating electrical machines with salient pole rotors.

### BACKGROUND

Rotating electrical machines with salient pole rotors have rotor coils wound around the poles projecting from the central shaft.

Coil supports on salient pole rotors prevent the rotor coils to deform due to the centrifugal force. Coil supports however also prevent the cooling air from passing freely over the rotor coils. This may result in insufficient cooling in the axial centre of the rotor and the stator.

Examples of coil supports are disclosed in DE1205182 B and US20050212373 A1. These coil supports are however rather heavy and don't provide efficient cooling of the rotor coils.

### SUMMARY

Thus, in view of the above an object of the present disclosure is to provide a rotating electrical machine which solves or at least mitigates the problems of the prior art.

There is hence provided a rotating electrical machine comprising: a stator, and a salient pole rotor rotatably arranged in the stator, the salient pole rotor comprising: salient poles, each salient pole comprising a protruding body and a rotor coil wound around the protruding body, and coil supports arranged between adjacent salient poles, configured to hold the rotor coils of the adjacent salient poles in place, wherein each coil support comprises a structure configured to enable air flow in a radial direction of the salient pole rotor, and in the longitudinal axial direction of the salient pole rotor.

By means of the structure cooling flow can be provided in both the longitudinal axial direction and in the radial direction. The rotor coils can thus be cooled more efficiently.

According to one embodiment each coil support has openings arranged to allow air flow to enter into and/or exit the structure along the radial direction and/or the longitudinal axial direction and/or the tangential direction.

According to one embodiment the structure is made by additive manufacturing.

According to one embodiment the structure is a lattice structure. Due to the pervious lattice structure, the coil supports may be made lighter thus reducing the load on the coil support bolts with which the coil supports are attached to a body of the salient pole rotor.

According to one embodiment the structure comprises a plurality of unit cells configured to enable the air flow in the radial direction and in the longitudinal axial direction.

According to one embodiment the unit cells are configured to enable air flow in a tangential direction of the salient pole rotor. Cooling air may thus be directed directly onto the rotor coils.

The unit cells may be arranged in an ordered or non-ordered manner.

According to one embodiment the unit cells form flow passages in the radial direction, the longitudinal axial direction and in the tangential direction of the salient pole rotor, to enable the air flow in the radial, the longitudinal axial, and the tangential direction.

According to one embodiment the flow passages in the radial direction, the longitudinal axial direction, and the tangential direction are in fluid communication, enabling the air flows in the radial direction, the longitudinal axial direction, and the tangential direction to mix and cross each other.

According to one embodiment the structure consists of non-ferromagnetic material.

The structure may for example comprise a non-ferromagnetic metal such as aluminium, an aluminium alloy, austenitic stainless steel, a titanium alloy, or a polymeric material, or a polymeric composite material.

One embodiment comprises at least one fan, wherein each coil support is arranged to receive air flow into the structure from the at least one fan.

According to one embodiment one of the at least one fan is arranged coaxially with the salient pole rotor, and wherein the coil supports are arranged to receive air flow from the fan along the longitudinal axis of the salient pole rotor into their structure.

According to one embodiment one of the at least one fan is arranged along a radial axis of the salient pole rotor, and wherein the coil supports are arranged to receive air flow from the fan along the radial axis of the salient pole rotor into their structure.

According to one embodiment at least one of the openings of each coil support faces the at least one fan.

According to one embodiment each coil support comprises a frame, wherein the structure is arranged in the frame.

According to one embodiment the frame is composed of a non-ferromagnetic material.

The frame may for example comprise a non-ferromagnetic metal such as aluminium, an aluminium alloy, austenitic stainless steel, a titanium alloy, or a polymeric material, or a polymeric composite material.

One embodiment comprises a plurality of coil support electrical insulations, the coil support electrical insulations being arranged to provide electrical insulation between the coil supports and the rotor coils, wherein the coil support electrical insulations have a lattice design.

The coil support electrical insulations may be integral with the coil supports, or they may be separate plates.

The coil support electrical insulations may for example be made by additive manufacturing.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

Exemplifying embodiments will now be described, with reference to the accompanying drawings, in which:
Fig. 1 schematically shows a sideview of an example of a rotating electrical machine;
Fig. 2 is a perspective view of an example of a salient pole rotor;
Fig. 3 is a perspective view of an example of a coil support; and
Fig. 4 is a perspective view of another example of a coil support.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

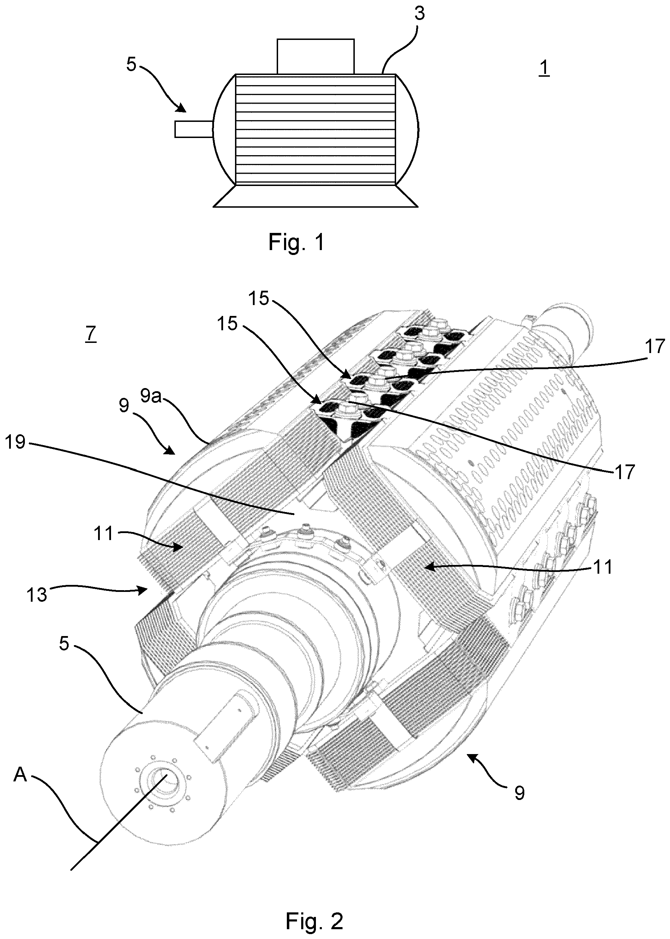

Fig. 1 shows an example of a rotating electrical machine 1. The rotating electrical machine 1 may be a generator or a motor.

The rotating electrical machine 1 may have a machine frame 3. Further, the rotating electrical machine 1 comprises a stator, not visible in Fig. 1. According to the example, the stator is arranged inside the machine frame 3.

The rotating electrical machine 1 furthermore comprises a rotor, not visible in Fig. 1. The rotating electrical machine 1 comprises a rotor shaft 5, on which the rotor is mounted.

The rotor is arranged rotatably in the stator. The rotor is thus configured to rotate relative to the stator, inside the stator.

The rotor is a salient pole rotor 7, of which an example is shown in Fig. 2. The salient pole rotor 7 has a plurality of salient poles 9. The salient poles 9 protrude from the rotor shaft 5 in respective radial directions. Adjacent salient poles 9 are arranged at an angle less than 180° relative to each other. Typically, the angle is 90° or less.

The salient poles 9 may be made of laminated sheets of metal, such as steel.

The salient pole rotor 7 comprises a plurality of rotor coils 11. The rotor coils 11 form part of respective salient poles 9. Each salient pole 9 is formed by a protruding body 9a and a rotor coil 11, wound around the protruding body 9a. Each rotor coil 11 is wound such that it extends along sides of the protruding body 9a, two of the sides being along the longitudinal axis A of the salient pole rotor 7.

The space between two adjacent salient poles 9 is herein termed an intermediate channel 13. The salient pole rotor 7 comprises the same number of intermediate channels 13 as the number of salient poles 9. In the present example, the salient pole rotor 7 has four salient poles 9, and four intermediate channels 13. The salient pole rotor could according to some examples have more than four salient poles.

The salient pole rotor 7 comprises a plurality of coil supports 13. The coil supports 15 are arranged in the space between two adjacent salient poles 9. The coil supports 15 are arranged in the intermediate channels 13. The coil supports 13 may be wedge-shaped in a cross-section of the salient pole rotor 7, to fit into the intermediate channels 13.

A plurality of coil supports 15 may be arranged in each intermediate channel 13. The coil supports 15 may be arranged one after the other in the intermediate channels 13.

The coil supports 15 hold the rotor coils 11 in place. The coil supports 15 provide pressure onto the rotor coils 11, especially when the salient pole rotor 7 is rotating.

The salient pole rotor 7 comprises a plurality of fasteners 17, such as bolts or screws. The coil supports 15 are attached to a body 19 of the salient pole rotor 7 by means of the fasteners 17.

The salient pole rotor 7 may comprise coil support electrical insulations (not shown), arranged to electrically insulate the rotor coils 11 from the coil supports 15. The coil support electrical insulations may be integral with the coil supports 15 or they may be in the form of separate plates arranged between the coil supports 15 and the rotor coils 11. The coil supports 15 are thus in direct contact with the rotor coils 11 if the coil support electrical insulations form an integral part of the coil supports 15. Otherwise, the coil supports 15 are in indirect contact with the rotor coils 11, via the coil support electrical insulations arranged as separate plates.

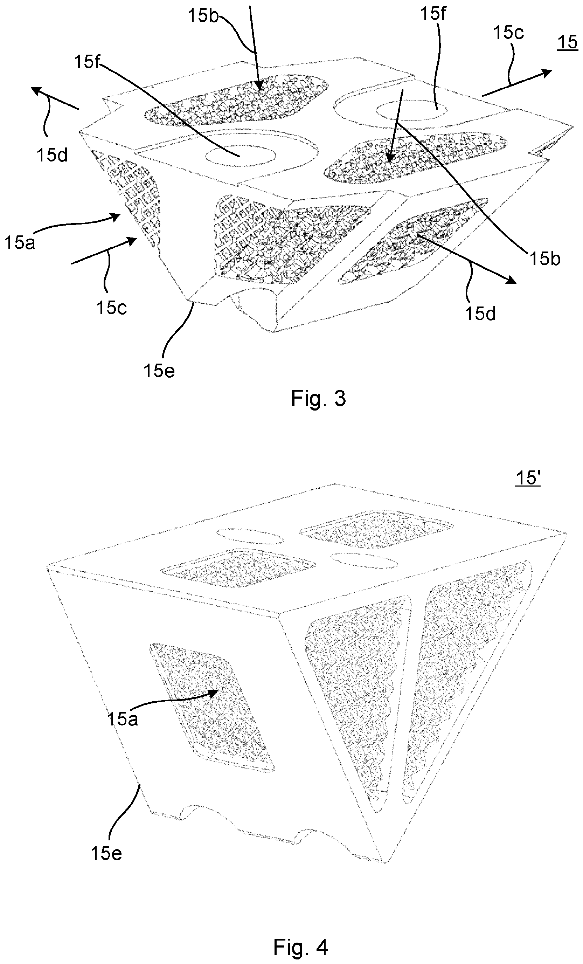

Fig. 3 shows an example of a coil support 15. The coil support 15 comprises a structure 15a. The structure 15a may form a majority of the volume of the coil support 15. According to one example, as much as possible of the coil support 15, taking mechanical strength requirements into account, is made up of the structure 15a.

The structure 15a comprises, or consists, of a non-ferromagnetic material.

The structure 15a may preferably be made by additive manufacturing.

The structure 15a may be a lattice structure.

The structure 15a is configured to enable air flow 15b in a radial direction of the salient pole rotor 7. The structure 15a is configured to enable air flow 15b to pass through it in the radial direction. In operation of the rotating electrical machine 1, the radial direction of the air flow may for example be a radial inwards direction as shown in Fig. 3, and/or a radial outwards direction. This generally depends on the configuration of the cooling system of the rotating electrical machine 1.

The structure 15a is configured to enable air flow 15c in a longitudinal axial direction of the salient pole rotor 7. The structure 15a is configured to enable air flow 15c to pass through it in the longitudinal axial direction.

The structure 15a may be configured to enable air flow in a tangential direction of the salient pole rotor 7.

The structure 15a may comprise a plurality of unit cells. A unit cell is the smallest building block of the lattice structure 15a, which may be repeated a multitude of times to form the structure 15a.

The unit cells may be configured to enable the air flow 15b in the radial direction. The unit cells may be configured to enable the air flow 15c in the longitudinal axial direction. The unit cells may be configured to the enable air flow 15d in the tangential direction. The unit cells may form flow passages in the radial direction, the longitudinal axial direction and in the tangential direction of the salient pole rotor 7, to enable the air flow in the radial, the longitudinal axial, and tangential direction.

According to one example, the flow passages in the radial direction, the longitudinal axial direction, and the tangential direction are in fluid communication. This enables the air flows in the radial direction, the longitudinal axial direction, and the tangential direction to mix and cross each other.

The coil support 15 may comprise a frame 15e. The coil support 15 could alternatively be frameless. In the latter case, the structure 15a may form the entire coil support 15.

The frame 15e is made of a non-ferromagnetic material.

The frame 15e has openings arranged to allow air flow to enter into or exit the structure 15a along the radial direction and the longitudinal axial direction. The frame 15e may also have openings to allow air to exit the structure 15a in tangential directions.

Each coil support 15 comprises one or more fastener openings 15f. Each fastener opening 15f is configured to receive a fastener 17 for attaching the coil support 15 to the body of the salient pole rotor 7.

The rotating electrical machine 1 comprises at least one fan. The one or more fans form part of the cooling system of the rotating electrical machine 1.

One fan may according to one example be arranged concentrically with the rotor shaft 5. The fan will in this case blow air along the longitudinal axis A of the salient pole rotor 7. The air blown by the fan enters the lattice structure 15a along the longitudinal axis A and causes air flow in the longitudinal axial direction of the salient pole rotor 7 inside the coil support 15. The structure 15a may then redistribute this air flow through its structure of unit cells such that the air exits in the radial direction, e.g., radially outwards and/or inwards. The structure 15a may redistribute the air flow through its design of unit cells such that air exits in opposite tangential directions, towards rotor coils 11. In case the coil supports 15 have frames 15e, one of the openings of the frame 15e faces the fan.

According to one example, one or more fans may be arranged along a radial axis of the salient pole rotor 7. The one or more fans are in this case arranged stationary, in the stator, configured to blow air in the radial direction towards the salient pole rotor 7. The coil supports 15 may in this case be arranged to receive air flow from such a radially blowing fan into the structure 15a. The radial air flow into the lattice structure 15a may then be redistributed to provide air flow in the tangential directions towards the rotor coils 11, and/or the longitudinal axial directions.

Fig. 4 shows another example of a coil support 15'. The coil support 15' is in general very similar to the coil support 15 shown in Fig. 3.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Rotating electrical machine (1) comprising:
a stator, and
a salient pole rotor (7) rotatably arranged in the stator, the salient pole rotor (7) comprising:
salient poles (9), each salient pole (9) comprising a protruding body (9a) and a rotor coil (11) wound around the protruding body (9a),
and
coil supports (15) arranged between adjacent salient poles (9), configured to hold the rotor coils (11) of the adjacent salient poles (9) in place,
wherein each coil support (15) comprises a structure (15a) configured to enable air flow in a radial direction of the salient pole rotor (7), and in the longitudinal axial direction of the salient pole rotor (7).

2. Rotating electrical machine (1) as claimed in claim 1, wherein each coil support (15) has openings arranged to allow air flow to enter into and/or exit the structure (15a) along the radial direction and/or the longitudinal axial direction and/or the tangential direction.

3. Rotating electrical machine (1) as claimed in claim 1, wherein the structure (15a) is made by additive manufacturing.

4. Rotating electrical machine (1) as claimed in any of the preceding claims, wherein the structure (15a) is a lattice structure.

5. Rotating electrical machine (1) as claimed in any of the preceding claims, wherein the structure (15a) comprises a plurality of unit cells configured to enable the air flow in the radial direction and in the longitudinal axial direction.

6. Rotating electrical machine (1) as claimed in claim 5, wherein the unit cells are configured to enable air flow in a tangential direction of the salient pole rotor (7).

7. Rotating electrical machine (1) as claimed in claim 6, wherein the unit cells form flow passages in the radial direction, the longitudinal axial direction and in the tangential direction of the salient pole rotor (7), to enable the air flow in the radial, the longitudinal axial, and the tangential direction.

8. Rotating electrical machine (1) as claimed in claim 7, wherein the flow passages in the radial direction, the longitudinal axial direction, and the tangential direction are in fluid communication, enabling air flows in the radial direction, the longitudinal axial direction, and the tangential direction to mix and cross each other.

9. Rotating electrical machine (1) as claimed in any of the preceding claims, wherein the lattice structure (15a) consists of non-ferromagnetic material.

10. Rotating electrical machine (1) as claimed in any of the proceeding claims, comprising at least one fan, wherein each coil support (15) is arranged to receive air flow into the lattice structure (15a) from the at least one fan.

11. Rotating electrical machine (1) as claimed in claim 10, wherein one of the at least one fan is arranged coaxially with the salient pole rotor (7), and wherein the coil supports (15) are arranged to receive air flow from said fan along the longitudinal axis (A) of the salient pole rotor (7) into their lattice structure (15a).

12. Rotating electrical machine (1) as claimed in claim 10, wherein one of the at least one fan is arranged along a radial axis of the salient pole rotor (7), and wherein the coil supports (15) are arranged to receive air flow from said fan along the radial axis of the salient pole rotor into their lattice structure (15a).

13. Rotating electrical machine (1) as claimed in any of the preceding claims, wherein each coil support comprises a frame (15e), wherein the lattice structure (15a) is arranged in the frame (15e).

14. Rotating electrical machine (1) as claimed in claim 11, wherein the frame (15e) is composed of a non-ferromagnetic material.

15. Rotating electrical machine (1) as claimed in any of the preceding claims, comprising a plurality of coil support electrical insulations, the coil support electrical insulations being arranged to provide electrical insulation between the coil supports (15) and the rotor coils (11), wherein the coil support electrical insulations have a lattice design.
